# EUROPEAN PATENT APPLICATION

(11) **EP 2 412 610 A2**
(43) Date of publication of application: **01.02.2012**
(21) Application number: 11172690.7
(22) Date of filing: 05.07.2011
(51) Int. Cl.: B62D 6/00, B62D 137/00

(54) **Steering control from scanned wheel information**

(30) Priority: 30.07.2010 US 847357
(71) Applicant: DEERE & COMPANY, Moline, Illinois 61265-8098 (US)
(72) Inventor: Mackin, Ryan Patrick, Moline, IL 61264 (US); Burke, Daniel J, Cordova, IL 61242 (US); Coers, Bruce A, Hillsdale, IL 61257 (US)
(74) Representative: Holst, Sönke

(57) **Abstract**

A method for automatically controlling the extension and steering of left side and right side wheels (112, 114) in a work vehicle (102), the vehicle (102) having a digital microcontroller (172) configured to control the steering of left side and right side wheels (112, 114) by electronically scanning data from identifiers (136, 138, 140, 141) on the left and right side wheels (112, 114) that are indicative of wheel geometry of the left and right side wheels (112, 114); electronically transmitting the data to the digital microcontroller (172); calculating steering angle limits in the digital microcontroller (172) based upon the data; and electronically facilitating in the digital microcontroller (172) that the left and right side wheels (112, 114) are steered within the steering angle limits during subsequent operations of the work vehicle (102).

## Description

### Field of the Invention

The invention relates to agricultural harvester vehicles. More particularly it relates to suspensions for agricultural harvester vehicles. Even more particularly it relates to methods for automatically controlling steering for agricultural harvester vehicles.

### Background of the Invention

Agricultural harvester vehicles have been proposed that shall include axles that are automatically adjustable during operation of the agricultural harvester vehicle in the agricultural field.

In one arrangement, an electronic controller in the vehicle will automatically extend and retract the axles, wheels and tires fixed thereon; as well as automatically steer the axles under computer control as the vehicle travels through the field.

In one specific arrangement, the agricultural harvester will extend the axles, and thus move the wheels away from the sides of the vehicle at the same time it steers the wheels to one side or another from the straight-ahead position. The wheels can thereby be held as close as possible to the sides of the vehicle when the vehicle was traveling in the straight-ahead course, and can be extended from the sides of the vehicle to provide clearance as the wheels are steered to the left and to the right, while keeping the wheels as close as possible to the sides of the vehicle.

One problem with this arrangement is that a wide variety of wheels and tires with widely varying dimensions may be mounted on the ends of the axles. This means that no single setting of axle extension versus steering angle can be provided that will prevent the interference of all possible wheels and tires that may be attached to the vehicle.

Whenever the operator changes his wheels and tires to other wheels and tires having different dimensions he must therefore adjust steering limits of each tire and wheel combination to ensure that the tire does not rub against the side of the combine when the wheels are turned to the left, turned to the right, or when the axles are fully retracted into the sides of the vehicle. This iterative process is unreliable, however. If the operator miscalculates when providing this information to the electronic controller it steers the vehicle and extends the axles severe damage may result when the wheels interfere with the sides of the vehicle.

One way to reduce this possibility for error is to automate the process of programming the controller by providing wheel and tire information to the controller electronically.

US 7504947 B2 describes the process of storing tire information in an RFID tag that is permanently embedded in the tire and electronically scanning that tag to store the information. This advantageously permits an unskilled operator to make a perfect copy of any data stored in the tire, thereby reducing errors in data collection.

US 7348878 B2 discloses an electronic system for continuously monitoring these RFID tags (and pressure sensors mounted on vehicle wheels) to continuously monitor the condition of the tire (i.e. tire pressure) and to signal the operator when the pressure is out of range.

In this arrangement, radio receivers permanently connected to the vehicles electronic controller area network are disposed adjacent to the RFID tags and continuously receive information radioed from the tags. This information is provided to an electronic controller on the controller area network (CAN) which processes the information and determines whether or not the tires are properly inflated. If not, the controller drives a display to signal the operator.

Neither of these teaches that the wheel information should be used to control the steering system of the vehicle.

What is needed, therefore, is a method and apparatus for more reliably determining and controlling the range of steering and axle extension (more generally the movement and positioning) of the wheels during the agricultural harvester's normal operation.

It is an object to provide such a method and apparatus in one or more of the embodiments described below and claimed in the appended claims.

### Summary of the Invention

An agricultural harvester vehicle is provided having a chassis upon which two front drive wheels and two rear steerable wheels are mounted. The rear steerable wheels are mounted on axles that can be steered or extended (or both) under computer control. A digital microcontroller is provided to steer or extend the rear wheels (or both).

The digital microcontroller is configured to electronically receive tire or rim information (or both) that is scanned from the tire, rim, or both and based upon this information, to establish steering limits and axle extension or retraction limits beyond which the digital controller will not permit the wheels to be steered, extended or retracted.

The operator scans identifiers on the wheel which may be visual indicia or electronic data stored in embedded RFID tags to gather the wheel information. The operator communicates this scanned information to the microcontroller, which then uses the data to determine the appropriate axle extension limits and wheel steering limits.

The data scanned from identifiers on the wheel (tire, rim or both) may be geometric information, in which case the digital microcontroller can use it directly to geometrically calculate acceptable steering angle and axle retraction limits. Alternatively, it may be manufacturers' model numbers, SKU's or other non-geometric information. In this alternative case, the digital microcontroller has an internal lookup table that associates model information with geometric information from which it can derive wheel geometry and thus the appropriate steering angle and axle retraction limits.

### Embodiment of the invention

An embodiment of the invention is shown in the drawings, in which:
Figure 1 is a plan view of an agricultural harvesting vehicle in accordance with the present invention.
Figure 2 is a fractional detail view of the right rear wheel of Figure 1 showing the location of wheel and tire identifiers.
Figure 3 is a fractional detail view of the wheel of Figures 1-2 mounted on the right rear axle.
Figure 4 is a schematic view of the control system for steering the agricultural harvester.
Figures 5A-5B illustrate how the steering angle limits are varied by the control system based upon tire information and wheel information received from the identifiers located on the wheel and/or tire.
Figures 6A-6B illustrate how the axle retraction limits are varied by the control system based upon tire information and wheel information received from the identifiers located on the wheel and/or tire.

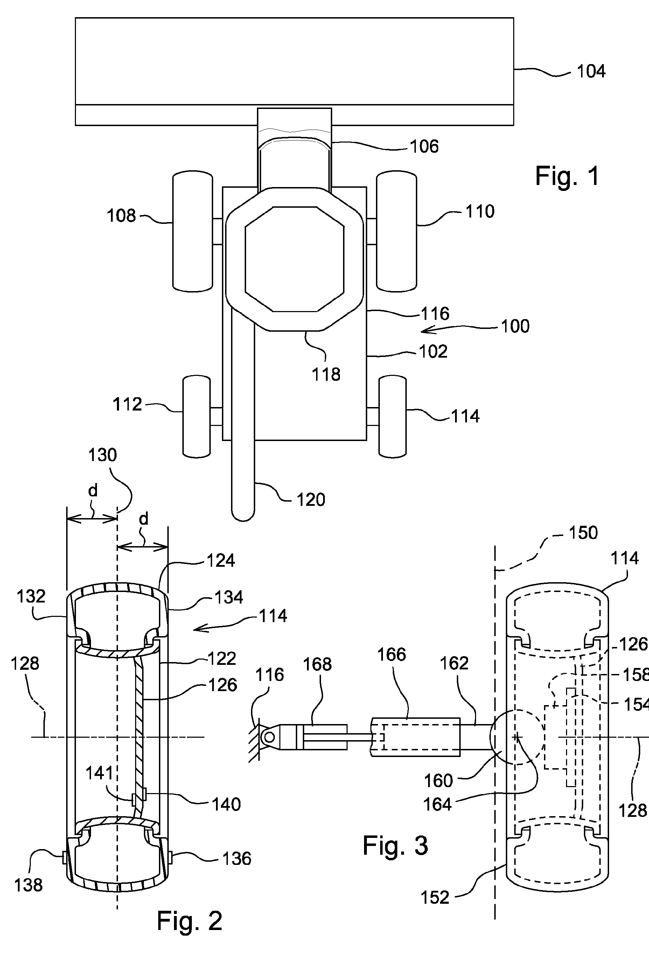

In Figure 1, an agricultural harvester 100 is shown in plan view. It includes an agricultural harvester vehicle 102 to which a harvesting head 104 is attached. The harvesting head 104 is supported on a feederhouse 106 which extends forward from the front of the agricultural harvester vehicle 102.

Agricultural harvester vehicle 102 is supported on four wheels including a left front drive wheel 108, a right front drive wheel 110, a left rear steerable wheel 112, and a right rear steerable wheel 114.

Front drive wheels 108 and 110 do not steer. Instead, they are coupled to hydraulic motors with reduction gear boxes (not shown) that in turn are fixed directly to the chassis 116 of agricultural harvester vehicle 102.

Rear steerable wheels 112, 114 are supported on extendable axles, and can be steered to the left and to the right away from their central straight-ahead position shown in Figure 1.

A grain tank 118 is located at the top of the agricultural harvester vehicle 102 to store grain gathered by harvesting head 104. An elongate unloading conveyor 120 extends from chassis 116 to convey grain from grain tank 118 to a grain truck or cart (not shown) that is disposed adjacent to the agricultural harvester 100 during unloading.

In Figure 2, the right rear steerable wheel 114 is shown. The right side steerable wheel 114 includes a rim 122 on which a tire 124 is mounted. Wheel 114 includes a mounting surface 126 that is generally perpendicular to and symmetric about the central rotational axis 128 of wheel 114. Mounting surface 126 is flat, conical, or dished and is offset slightly to one side of a plane of symmetry 130. The plane of symmetry 130 bisects wheel 114 and is spaced an equal distance "d" from the innermost left side 132 and the outermost right side 134 of wheel 114.

Identifiers 136 and 138, 140 and 141, such as electronically scannable tags (e.g. RFID tags) or visual indicia, may be fixed on or embedded in the tire 124 and the rim 122, preferably on (or in) both side walls or side facing surfaces of the tire 124 and rim 122, respectively.

Identifiers 136, 138, 140, 141 are configured to store data regarding the tire and rim and to transmit that information by radio waves (if the identifiers are RFID tags, for example) or by light reflected off the surface (if the identifiers are visual indicia such as barcodes, characters, or the like) to a scanning device.

Scanning devices (not shown) may include a laser scanner, a barcode scanner, a two-dimensional barcode scanner, or an electronic camera configured to read the visual indicia. Scanning devices may also include radio receivers configured to read RFID tags or similar devices.

Identifiers 136, 138 are located on or embedded within tire 124 and preferably include information identifying characteristics of the tire, including the tire manufacturer, SKU number, model number, manufacturing date, tire dimensions, load limits, speed rating, and other identifiers indicating the identifiers, types, or dimensions of rims on which the tire on 27 can be properly mounted.

Identifiers 140, 141 are located on or embedded within rim 122 and preferably include information identifying characteristics of the rim, including the rim manufacturer, SKU number, model number, manufacturing date, rim dimensions, load limits, speed rating, and other identifiers indicating the identifiers, types, or dimensions of tires which can be properly mounted on rim 122.

Referring now to Figure 3, wheel 114 is shown adjacent to side wall 150 of agricultural harvester vehicle 102. Wheel 114 is shown in the straight-ahead position, which is the position the wheel assumes when the agricultural harvester 100 is traveling in a straight line over the ground.

The left rear wheel 112 and its associated axle, drive, and steering components are constructed identically and function identically, but in mirror relation to right rear wheel 114.

The embodiment pictured here shows a telescopic axle member with a steering actuator disposed at the end. This is one embodiment. However, other axle steering and extension arrangements may alternatively be used. Alternative arrangements may include an axle that extends but not does not steer, or an axle that steers but does not extend. For an axle that steers but does not extend, the system is configured to automatically adjust the steering angle limits. For an axle that extends but does not steer, the system is configured to automatically adjust the axle extension limits

Wheel 114 has an inside surface 152 and an outside surface 153. The term "inside surface" indicates a surface of wheel 114 that faces generally inwardly toward the sidewall 150 of the agricultural harvester when the wheel 114 is mounted on the agricultural harvester. The inside surface 152 of wheel 114 can be an inside surface of tire 124 or of rim 122. The term "outside surface" indicates a surface of wheel 114 that faces generally outwardly away from the sidewall 150 of the agricultural harvester when the wheel 114 is mounted on the agricultural harvester. The outside surface of wheel 114 can be an outside surface of tire 124 or rim 122.

Wheel 114 is bolted to a hub 154 that extends from the outer end of the axle 156. A motor and gearbox 158 is fixed to hub 154 and rotates hub 154 about axis 128. Motor and gearbox 158 may be driven by electricity or pressurized hydraulic fluid.

A steering actuator 160 is fixed to hydraulic motor and gearbox 158 and is mounted on extendable axle member 162. Steering actuator 160 may be driven by electricity or by pressurized hydraulic fluid. Steering actuator 160 pivots motor and gearbox 158 and hub 154 about a generally vertical axis 164.

Extendable axle member 162 is generally straight and elongate. It may be square, circular, rectangular, or polygonal in cross section. It is slidably supported in an outer telescopic axle portion 166 to permit it to slide in and out as the vehicle is being driven over the ground, thereby retracting and extending axle 156.

An actuator 168, here shown as a hydraulic cylinder, is coupled to the chassis 116 and to extendable axle member 162, and is configured to extend and retract extendable axle member 162 under computer control (not shown). Actuator 168 is shown here as a hydraulic actuator, preferably a hydraulic cylinder. It may alternatively be an electrically driven actuator, such as an electric motor driven ball screw.

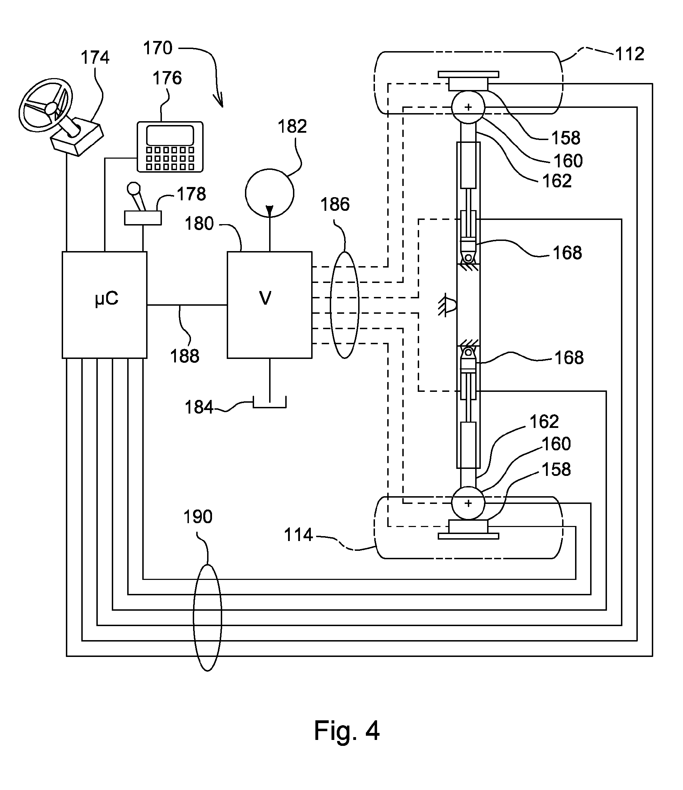

Referring now to Figure 4, an electronic control circuit 170 is shown that is configured to steer the agricultural harvester vehicle 102 while holding the wheels as closely as possible to the left and right side walls 150 of the vehicle by extending and retracting the extendable rear axle members 162 on the left and right side of the vehicle using actuators 168 and by simultaneously steering the left and right rear wheels 112,114 left and right using actuators 160,.

Electronic control circuit 170 includes a digital microcontroller 172 that is coupled to an operator input device 174 for receiving steering angle commands from the operator to steer the vehicle (device 174 is here shown as comprising a steering wheel). Operator input device 176 (here shown as a keyboard with a display), radio receiver 178, and valve circuit 180 are also coupled to digital microcontroller 172. A scanner 173 has a keyboard and display and is configured to electronically scan identifiers 136, 138,140, 141 and communicate the contents of the identifiers to digital microcontroller 172 via radio receiver 178.

Valve circuit 180 is provided with hydraulic fluid under pressure from hydraulic fluid supply 182 and returns hydraulic fluid to a low-pressure tank or reservoir 184. Valve circuit 180, in turn, is coupled to motors and gearboxes 158, steering actuators 160, and axle extending actuators 168 by hydraulic lines 186.

Valve circuit 180 is configured to direct the flow of hydraulic fluid to and from the actuators and motors to drive the wheels in rotation, as well as to steer them to the left and to the right from the straight-ahead position, and to extend them laterally away from and back toward the left and right sides of agricultural harvester vehicle 102. Valve circuit 180 is configured to do this in response to commands from digital microcontroller 172 over signal lines 188.

Position and speed sensors disposed in pub 158, steering actuator 160, and axle extension actuator 168 transmit the wheel speed, steering angle, and axle extension to digital microcontroller 172 on signal lines 190.

During normal operation of the vehicle in the field or on the road, the operator turns the steering wheel of operator input device 174 to indicate a desired steering angle for the steerable rear wheels When the operator does this, the operator input device 174 transmits a signal indicating the desired steering angle to digital microcontroller 172. The digital microcontroller 172 receives the signal and (1) calculates a desired degree of extension of extendable axles 162, and (2) calculates a desired steering angle.

The farther the operator rotates the steering wheel, the farther digital microcontroller 172 turns wheels 112, 114 (by driving actuators 160) and by simultaneously extending the extendable axles 162 (by driving actuators 168) in order to maintain a narrow clearance between the innermost portion of wheels 112, 114 and left and right side walls 150 of vehicle 102.

Digital microcontroller 172 is configured to steer the wheels 112, 114 as the operator turns the steering wheel until the steering angles of wheels 112, 114 reach predetermined steering angle limits. These limits are stored in the digital microcontroller 172 and are used as a reference by digital microcontroller 172 to prevent further steering of the wheels if the wheels (or other hub mounted equipment) would thereby hit the side wall 150 of the agricultural harvester.

Using the present system, the operator does not have to manually calculate the steering angle limits for each axle extension position, or manually adjust mechanical steering stops or axle retractions stops when he changes, replaces or adjusts the tires or rims.

Instead, the operator merely scans and transmits the data stored in or indicated by identifiers 136, 138, 140, 141 to digital microcontroller 172 when he changes or adjusts the wheels, tires, or rims.

The digital microcontroller 172 is configured to receive this identifier data, determine the appropriate wheel 112, 114 steering limits and corresponding extendable axle member 162 positions, and then save these limits for use whenever the operator steers the vehicle.

In one mode of operation, the operator operates scanner 173 to receive and transmit this data to digital microcontroller 172. The operator moves to the rear of the vehicle, brings scanner 173 to the vicinity of the identifiers 136, 138, 140, 141 on the right rear wheel 114 and on the left rear wheel 112 and signals the scanner 173 to read the identifiers. Once the identifier data is gathered, the operator signals scanner 173 to transmit this data to digital microcontroller 172.

In another mode of operation, the operator gathers the data from the identifiers visually and types the data into the input device 176, which provides the data to digital microcontroller 172.

In another mode of operation, the display provided on scanner 173 or on operator input device 176 is configured to instruct the operator which data to enter into the scanner 173 or operator input device 176 and in what order to enter it. For example, the scanner 173 indicates on its display that the operator is to scan data from the identifiers on the inside surface 152 (Fig. 3) of the wheel (tire, rim, or both), or on the outside surface 153. In this case, if the operator reversed the wheels 112, 114 such that their previously outwardly facing surface faced inwardly and their previously inwardly facing surface faced outwardly, this fact would be immediately determined by digital microcontroller 172, since the operator would scan different identifiers once he reversed the wheels than he did when the wheels were in their previous position.

In another mode of operation, the scanner 173 or operator input device 176 indicates on its display the order of scanning that the operator is to scan. For example indicating that the operator should first scan the identifiers 136 or 138 on the tire, and then scan the identifiers 140 or 141 on the wheel, (or vice versa).

In another mode of operation, the scanner 173 or operator input device 176 indicates on its display that the operator is to first scan or enter data from the wheel identifiers (tire, rim, or both) on the left rear wheel and then from the right rear wheel, or vice versa.

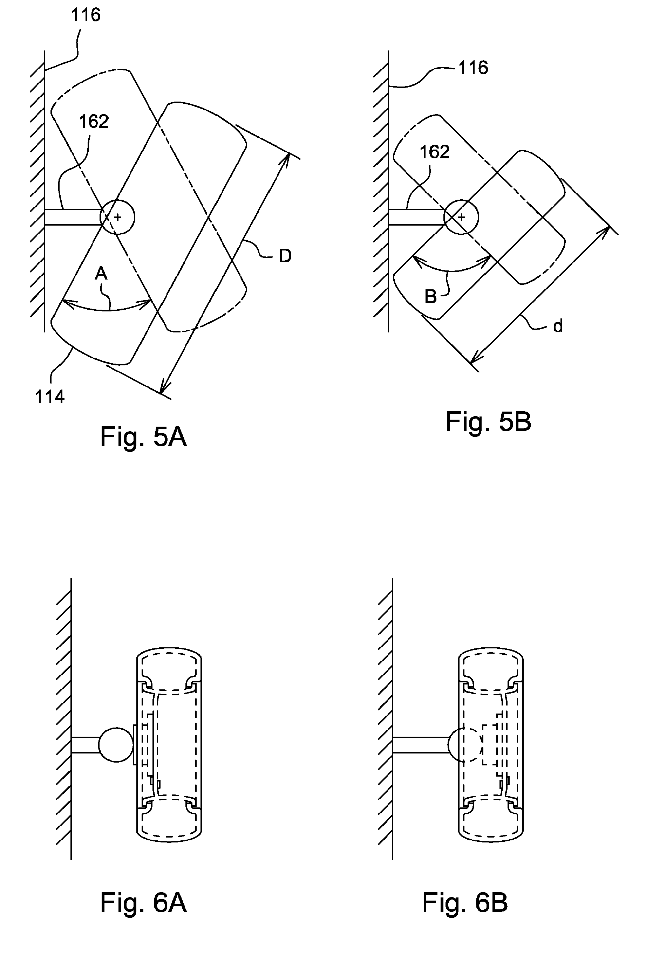

Once gathered and transmitted to the digital microcontroller 172, the digital microcontroller 172 is configured to use the data from the identifiers, such as the size and geometry of the tires and wheels, to determine appropriate steering and axle extension limits. This process is illustrated in Figures 5A, 5B, 6A, and 6B.

Assume that an initial small wheel 114 is supported on an extendible axle 162 as shown in Figure 5B. The wheel 114 has a maximum steering angle of "B" for the particular extension of the extendable axle. This maximum steering angle is based at least partially on its small overall diameter "d".

When the illustrated wheel 114 is replaced with a larger wheel 114, shown in Figure 5A, the smaller wheel has a smaller maximum steering angle "A" through which it can be steered for the same axle extension as shown in Figure 5B. This smaller maximum steering angle is based upon its larger overall diameter "D".

Digital microcontroller receives the data from identifiers 136, 138, 140, 141 and calculates the new reduced steering angles for each position of axle extension, and then limits the steering of wheel 114 to the reduced angle for all future steering actions.

In Figure 6A, an extendible axle member 162 and wheel 114 are disposed adjacent to the side 150 of the combine vehicle. With the wheel 114 in this position, identifier 141 faces outward and identifier 140 faces inward. The axle 162 may be retracted until the side wall of the vehicle is at the position indicated by the dashed line 150'.

The operator, having mounted wheel 114 in the position shown in Figure 6A previously scanned the outwardly facing identifier on the wheel (in this case identifier 141). The operator then transmitted the data from identifier 141 to digital microcontroller 172, and digital microcontroller 172 set the retraction limit of extendable axle member 162 such that the axle could be retracted until the side wall 150 of vehicle 102 is in the position indicated by line 150'.

In this axle position, almost the entire steering actuator 160 is withdrawn into the side 150 of the vehicle as indicated by the overlap of line 150' and the steering actuator 160. Yet the vehicle 102 is not at risk since a slight clearance "c" is provided at this, the retraction limit of the axle 162.

The operator then removes and reverses the wheel 114 from its position shown in Figure 6A to its position shown in Figure 6B. In Figure 6A, the outwardly facing identifier was identifier 141. In Figure 6b the outwardly facing identifier is now identifier 140.

As described above, the mounting surfaces of the rim are offset with respect to the axis of symmetry 130 of wheel 114. Therefore, if the digital microcontroller 172 retracts the axle member 162 of Figure 6B to the same retracted position as Figure 6A (indicated by dashed line 150'), then wheel 114 of Figure 6B will be pulled by actuator 168 into the side of the vehicle. This is indicated in Figure 6B by the overlap of line 150' and wheel 114.

To prevent this, the system must change the axle retraction limit. In Figure 6B extendable axle member 162 cannot be withdrawn as far as shown in Figure 6A.

Instead, extendable axle member 162 can be withdrawn a reduced distance until only a small portion of steering actuator 160 is retracted into the side wall of the vehicle 102. This reduced amount of retraction is indicated by the location of dash-dot line 150" which represents the location of the side wall of the vehicle when the extendable axle 162 is retracted this reduced distance. In this position, a slight clearance "d" is provided between the inner surface of wheel 114 and side wall 150 of vehicle 102.

To ensure that extendable axle member 162 can only retract this reduced distance and thereby prevent wheel 114 from damaging sidewall 150, digital microcontroller 172 is configured to automatically establish a new retraction limit. Digital microprocessor 172 calculates this new retraction limit based upon data received from identifiers 136, 138, 140, 141.

To establish this new retraction limit, the operator will first reverse the wheel 114 from the position shown in Fig. 6A to the position shown in Fig. 6B. Once the wheel is reversed, the operator then scans the identifiers on the wheel. In this case the operator scans the (new) outwardly facing identifier 140.

Identifier 140 has different data than identifier 141 indicating reversed orientation of wheel 114. Digital microcontroller 172 is configured to use this different data from identifier 140 and set the extendable axle retraction limit to that shown by line 150" when the wheel is pointing straight ahead (i.e. the steering angle is 0 degrees).

The identifiers may communicate digital data representing the actual dimensions of the tires and rims. Alternatively they may have model numbers, manufacturer names or SKU's that permit the digital microcontroller to look up the dimensions, either remotely over the internet, or by looking the data up in a lookup table or tables that associate these manufacturer numbers with specific dimensions.

Regardless of the data that digital microcontroller 172 receives from the identifiers, it is configured to derive from the identifiers axle retraction limits that will prevent damage to the vehicle, and to also derive appropriate steering angle limits for each axle extension position.

Having described the preferred embodiment, it will become apparent that various modifications can be made without departing from the scope of the invention as defined in the accompanying claims.

## Claims

1. A method for automatically controlling the extension and steering of left side and right side wheels (112, 114) in a work vehicle (102), the vehicle (102) having a digital microcontroller (172) configured to control the steering of left side and right side wheels (112,114); the method comprising the steps of:
electronically scanning data from identifiers (136,138, 140, 141) on the left and right side wheels (112, 114) that are indicative of wheel geometry of the left and right side wheels (112, 114);
electronically transmitting the data to the digital microcontroller (172);
calculating steering angle limits in the digital microcontroller (172) based upon the data; and
electronically controlling the steering of left and right side wheels (112, 114) such that they are steered within the steering angle limits during subsequent operations of the work vehicle (102).

2. The method of claim 1, further comprising the steps of:
calculating an axle retraction limit in the digital microprocessor (172) based upon the data; and
electronically facilitating in the digital microcontroller (172) that the left and right side wheels (112,114) are retracted to no more than the axle retraction limit during subsequent operations of the work vehicle (102).

3. The method of claim 1, wherein the left side and right side wheels (112, 114) comprise left side and right side tires (124) and left side and right side rims (126), respectively, and further wherein the identifiers (136, 138) on the left and right side wheels comprise RFID tags fixed to the left side and right side tires (124).

4. The method of claim 1, wherein the left side and right side wheels (112, 114) comprise left side and right side tires (124) and left side and right side rims (126), respectively, and further wherein the identifiers (140,141) on the left and right side wheels (112, 114) comprise RFID tags fixed to the left side and right side rims (126).

5. The method of claim 1, wherein the step of electronically scanning data from identifiers on the left and right side wheels (112,114) includes the step of:
electronically scanning the data from visual indicia on the wheels.

6. The method of claim 1, wherein the step of calculating steering angle limits includes the steps of:
mounting replacement wheels (112, 114) having a larger overall diameter; and
reducing a previously existing steering angle limit in the digital microcontroller (172) based upon data scanned from the replacement wheels (112, 114).

7. The method of claim 2, wherein the step of calculating an axle retraction limit includes the steps of:
mounting the left and right side wheels (112, 114) on the vehicle (102) in different mounting positions; and
changing previously existing axle retraction limits for the left and right side wheels (112, 114) in the digital microcontroller (172) based upon data scanned from the wheels in their new mounting positions.

8. The method of claim 1, wherein the work vehicle is an agricultural harvester and further wherein the left and right side wheels (112, 114) are left and right side rear wheels.

9. A work vehicle (102) having a digital microcontroller (172) configured to control the steering of left side and right side wheels (112,114); the digital microcontroller (172) programmed to:
receive electronically scanned data from identifiers (136,138, 140, 141) on the left and right side wheels (112, 114) that are indicative of wheel geometry of the left and right side wheels (112, 114);
calculate steering angle limits based upon the data; and
electronically controlling the steering of the left and right side wheels (112, 114) such that they are steered within the steering angle limits during subsequent operations of the work vehicle (102).
